# EUROPEAN PATENT APPLICATION

(11) **EP 2 685 187 A2**
(43) Date of publication of application: **15.01.2014**
(21) Application number: 13176358.3
(22) Date of filing: 12.07.2013
(51) Int. Cl.: F25D 23/12, F25C 1/00

(54) **Method and apparatus for sealing a food zone of an ice machine from external contaminants**

(30) Priority: 14.07.2012 US 201261671678 P
(71) Applicant: Manitowoc Foodservice Companies, LLC, Manitowoc, WI 54220 (US)
(72) Inventor: Polly, Gerald Polly, Manitowoc, Wisconsin 54220 (US); Thogersen, Gregory, Austen, Manitowoc, Wisconsin 54220 (US); Erbs, Dary, Sheboygan, Wisconsin 53080 (US)
(74) Representative: von Kreisler Selting Werner

(57) **Abstract**

Disclosed are methods and devices for sealing components and areas of the food zone of an ice machine, including systems that transport fluids and devices used for the production and harvest of ice. Due to the form, fit, and function of food zone components, gaps or pathways may exist in that unwanted fluids or solids may enter the food zone. Pathways for contamination to enter a food zone include: refrigeration tubing, water supply, drain tubing, electrical connections, and devices for antimicrobial protection, automatic cleaning systems, ice harvest assist, and transportation of ice from the ice making surface to the storage bin. Methods and devices of creating contaminant-proof barriers are disclosed, including: sealing, trapping, gasketing and/or creating a positive pressure within the food zone, alone or in combination. The methods and devices can be used in a systematic arrangement to create an essentially contaminant-proof ice machine food zone.

## Description

### CROSS-REFERENCED APPLICATION

This application claims priority to U.S. Provisional Application Serial No. 61/671,678, filed on July 14, 2012, which is incorporated herein in its entirety by reference thereto.

### BACKGROUND OF THE DISCLOSURE

### 1. Field of the Disclosure

This disclosure relates to a method and apparatus for sealing the food zone of an ice machine from external contaminants, including for reducing or eliminating outside contamination by gases, liquids, and solids (e.g., dust, dirt, airborne contaminants, insects and the like) to either pass through or enter into the food zone. More specifically, this disclosure relates to methods and devices that seal those elements of the food zone of ice machines that would normally be exposed to the outer environment (for example, all ice machine refrigeration systems are contained outside of the food zone and therefore potential exists for contaminants to penetrate into the food zone at openings where such refrigeration system elements enter and/or exit the food zone). As well, this disclosure relates to methods and devices that seal those elements of the food zone that are exposed to each other and/or interconnected within areas of the ice machine (for example, the size and functionality of most ice machines require the use of multiple parts to create the food zone, and the potential exists for gaps to form at the intersection(s) of the various parts). This disclosure provides novel elements and methods for sealing the food zone of an ice machine to prevent such ingress and spread of outside contamination.

### 2. Description of the Background Art

One of the largest concerns with ice machines is the cleanliness of not only the ice, but also the ice making compartment known as the food zone. The food zone of an ice machine is comprised of multiple components that are assembled together to form the ice making surface and surrounding support structure. The food zone can include, but is not limited to, any system that transports fluid (gas or liquid) into or out of the food zone. The food zone can also include devices used to assist in the production and harvest of ice. Due to the form, fit, and function of food zone components, gaps or pathways may exist in that unwanted fluids or solids may enter the food zone. Pathways for contamination to enter a food zone can include, but are not limited to: refrigeration tubing, water supply tubing, drain tubing, electrical connections, devices for antimicrobial protection, automatic cleaning systems, harvesting assist, and transportation of ice from the ice making surface to the storage bin. To date, these problems have gone largely unrecognized and unappreciated, or unsolved. The crux of the problem is that there is required dimensional variability associated with a complex assembly of heterogeneous parts that make up an ice machine for manufacturing and assembly purposes such that the areas where theses heterogeneous parts combine, pass through each other or along side each other may leave gaps of inconsistent size and shape. Also, sealing members and their attachment to the assembly, to the extent they may have been used in the past, often cannot accommodate the dimensional variability or they hinder the ability to disassemble and re-assemble the ice machine for normal cleaning and servicing activities without compromising the integrity of the overall sealing.

### SUMMARY

This disclosure includes methods and devices for creating contaminant-proof barriers for the food zone of an ice machine that overcome the aforementioned shortcomings and problems such as inconsistent gap size due to manufacturing variability, and difficulty in disassembly and reassembly. In order to provide contaminant-proof barriers for the food zone of an ice machine, various methods and devices may be used including: sealing, trapping, gasketing and the use of other methods and devices as required. The described methods and devices can be used singularly or in any combination or group of combinations, in a systematic arrangement to create contaminant-proof barrier(s) for a single or multiple area(s) within or surrounding the ice machine. For example, in a particular instance, it may be most important to seal the ingress and egress areas where ice machine refrigeration system elements enter and/or exit the food zone. The common thread that binds all of the devices and methods disclosed herein together are the use of compliant seals. This permits a completely sealed separation between the food zone and the outside world.

The present disclosure provides various methods and devices to prevent contaminants from entering the food zone of an ice machine. In one aspect, devices for creating contaminant-proof barriers for the food zone of an ice machine comprise: flexible gaskets, air flow, water traps, compressible seals, molded seals, hooks and anchors, flexible ribs, and any combinations thereof. In another of its aspects, methods of creating contaminant-proof barriers for the food zone of an ice machine comprise: sealing, trapping, gasketing, creating a positive pressure within the food zone, and any combinations thereof.

In one embodiment according to the present disclosure, methods and devices for trapping water in a drain carrying waste water from the ice machine is employed so as to prevent air and other contaminants from entering a food zone of the ice machine through the drain.

In another embodiment according to the present disclosure, methods and devices of preventing ingress of unwanted contaminants from entering the food zone comprises sealing an interface area of the ice bin of the ice machine, divider wall, auger shaft and gearbox of the ice machine from the food zone.

In a further embodiment according to the present disclosure, methods and devices are provided for preventing contaminants from entering the food zone through the openings provided for ingress and egress of supply and waste lines.

A still further embodiment according to the present disclosure provides methods and devices for sealing a float chamber device of an ice machine.

In yet another embodiment according to the present disclosure, methods and devices for sealing an ice chute assembly of an ice machine are provided.

In another additional embodiment according to the present disclosure, methods and devices for sealing the ice bin and ice chute interface in an ice machine are provided.

In yet another embodiment according to the present disclosure, methods and devices for sealing the interface between an ice bin lid and an ice bin are provided.

In still yet another embodiment according to the present disclosure, methods and devices for sealing the water distribution system entrance into the food zone from contaminants are provided.

In another additional embodiment according to the present disclosure, methods and devices for sealing the top area/periphery of the food zone from contaminants are provided.

In yet another embodiment according to the present disclosure, methods and devices for sealing the outer periphery of the door of the ice machine are provided.

### BRIEF DESCRIPTION OF THE DRAWINGS

Further features, advantages and details of the present disclosure will become apparent from the following description of the drawings in which:

Figs. 1a, 1b and 1c show an overall view of the ice machine with panels on (Fig. 1a), a view of the machine with panels off (Fig. 1b) and a highlighted view of the food zone (Fig. 1c);

Figs. 2a and 2b show side perspective views of two embodiments of devices and methods of a drain trap according to the present disclosure;

Figs. 3a and 3b show a cut-away view of an embodiment of devices and methods of providing a shaft seal according to the present disclosure;

Figs. 4a and 4b show a front view of a float chamber showing air gaps of potential contaminant entry (Fig. 4a) and an embodiment of devices and methods of sealing a float chamber device (Fig. 4b) according to the present disclosure;

Figs. 5a, 5b and 5c show top side perspective views of an embodiment of devices and methods of sealing an ice chute assembly according to the present disclosure;

Figs. 6a and 6b show perspective views of an embodiment of devices and methods of sealing an ice chute and ice bin lid interface according to the present disclosure;

Figs. 7a, 7b and 7c show enlarged top side perspective view, top side perspective view, and cross-sectional view (of the seal only), respectively, of an embodiment of devices and methods of sealing ice bin lid and ice bin interface according to the present disclosure;

Figs. 8a and 8b are top side perspective views showing the different zones within an ice machine and a component level view of the embodiments discussed in further paragraphs;

Figs. 9a-d show rear perspective views of an embodiment of devices and methods of providing a flexible bushing for sealing around a supply line (shown at 85 in Fig. 8b) according to the present disclosure;

Figs. 10a, 10b and 10c show a top side perspective view, an overhead view and side perspective views, respectively, of an embodiment of devices and methods of sealing the top of the food zone (shown at 81 in Fig. 8a) according to the present disclosure;

Figs. 11a, 11b and 11c show an exploded perspective view, a front view and an overhead perspective view, respectively, of an embodiment of devices and methods of sealing the water distribution system entrance into the food zone (shown at 84 in Fig. 8b) according to the present disclosure; and

Figs. 12a and 12b show an exploded view and a cross-sectional view, respectively, of an embodiment of devices and methods of sealing the front door of the ice machine (shown at 87 in Fig. 8b) according to the present disclosure.

### DETAILED DESCRIPTION OF THE DISCLOSURE

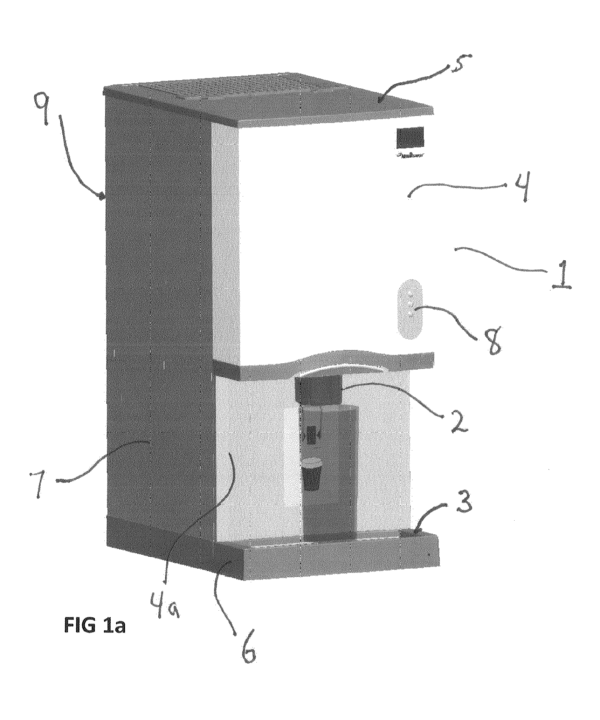

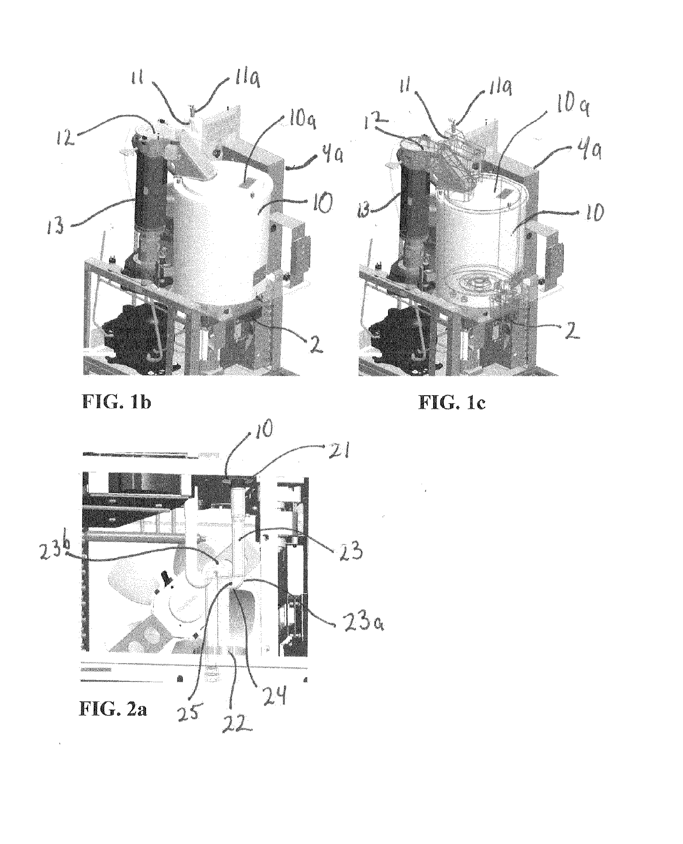

Figures 1 through 7 show sealing devices and methods in an ice making machine for the production and dispensing of shaved ice. The details of the devices and methods of the present disclosure will now be discussed in with reference to the Figures.

FIG. 1a shows a front perspective view of a general exterior of an ice machine according to the embodiments of Figs. 1-7. In Fig. 1a, ice machine 1 comprises ice dispenser opening 2, tray 3 for holding a cup for receiving dispensed ice, door 4, front panel 4a, top panel 5, base 6, side panels 7, back panel 9 and user interface 8. Figs. 1b and 1c show the ice machine of Fig. 1a with door 4, side panels 7, top panel 5 and back panel 9 removed. Behind front panel 4a is located ice bin 10 that supplies ice to ice dispenser opening 2. In the embodiment shown in Figs. 1b and 1c, ice bin 10 is disposed against front panel 4, but this configuration could of course be otherwise. Ice bin 10 has lid 10a covering it, and ice from a chamber 13 (ice chamber) in thermal communication with an evaporator of a refrigeration circuit is transported from ice chamber 13 through ice chute 12 and lid 10a to ice bin 10. Water is supplied to an evaporator of ice chamber 13 via float chamber 11, that has water supply 11a entering the top of float chamber 11 in the embodiment shown in Figs. 1b and 1c. The difference between Figs. 1b and 1c is that in Fig. 1c, "ghost" lines show portions of the insides of ice bin 10, lid 10a, float chamber 11 and ice chute 12, defining the food zone.

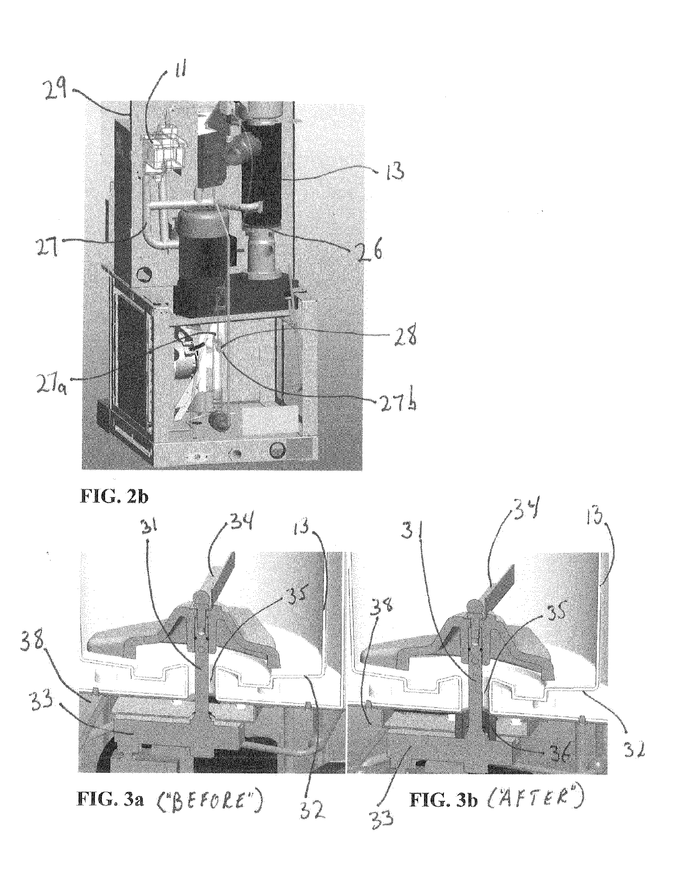

Shown in Figs. 2a and 2b are embodiments of drain traps that can be employed according to the present disclosure. In general, these types of drain traps work by capturing a volume of water in a portion of a pipe between a water outlet source or drain and a water disposal source. The captured volume of water then forms a barrier to prevent the ingress of unwanted contaminates via various drain openings. In situations where ice making machines are employed, building and health codes generally require an air gap between the disposal end of a waste water line and the opening in or into the building line that leads to municipal sewers. This opening is required so that water "locks" do not form in the drain line. In Fig. 2a, a bin drain 21 (that accepts water melt from ice bin 10) is connected to drain cup 22 by drain line 23, that is open to the atmosphere via the open end of drain line 23 (according to health and building codes, drain line 23 must have an "air space" between its remote end entering into municipal sewer lines (not shown)). A trap 24 is employed to capture a volume of water in the trap 24 from ice bin 10 melt and forms a contamination block 25, i.e., prevents migration of contamination backwards along the length of the drain line 23. Trap 24 is created by bends 23a and 23b in drain line 23 by a serpentine, reverse bend, as shown in Fig. 2a. Trap 24 is made by creating at least two associated reverse bends in drain line 23. A first bend is made by making an approximately 180° bend in drain line 23, as at 23a, followed by a reversed approximately 180° bend as at 23b. First bend 23a is disposed below second bend 23b, so that a quantity of drain water is captured in trap 24 at first bend 23a, thus sealing drain line 23 from the ingress of contaminants past first bend 23a in a direction along drain line 23 toward bin drain 21 and possibly into ice bin 10. In Fig. 2b, another application of a drain trap is set forth. For orientation purposes, the lower portion of Fig. 2b is a view from a 90° clockwise position from the view of Fig. 2a. In Fig. 2b, float chamber 11 is mounted to interior partition 29, and is shown in relation, e.g., to ice chamber 13. Water from float chamber 11 is supplied to ice chamber 13 via line 26. Overflow from float chamber 11 passes through drain line 27 also to drain cup 22 in a manner similar to drain line 23 in Fig. 2a. Also similar to Fig.2a, drain line 27 employs a trap 28 formed from bends 27a and 27b in drain line 27. The purpose of trap 28 is identical to that of trap 24 of Fig. 2a.

Shown in Figs. 3a and 3b is one embodiment of a method and device for sealing the opening for receiving an ice auger shaft 31 between the ice chamber 13 and the mechanical area 38. Figs. 3a and 3b are set forth in "before" and "after" situations. In Fig. 3a, shown are ice chamber 13, dividing wall 32, auger shaft 31, gearbox 33 and auger blade 34. Gearbox 33 via motor (not shown) rotates augur shaft 31 and auger blade 34 that, in turn, shaves ice from the surface of ice chamber 13. The action of the auger shaft 31 and auger blade 34 serve also to force shaved ice up to ice chute 12 and into ice bin 10 (see, Fig. 1a). Of course, auger shaft 31 passes through dividing wall 32 at auger opening 35 to transfer the rotational motion from gearbox 33 to auger shaft 31 and auger blade 34. Auger opening 35 at dividing wall 32 can provide an area of potential transfer of contamination to ice chamber13 and thereafter to ice bin 10. In Fig. 3b, as a specific embodiment of a method and device to seal auger opening 35, a non-porous foam cylinder/seal 36 may be used to seal auger opening 35 through which auger shaft 31 passes. The non-porous foam cylinder/seal 36, when employed, may be compressed between gearbox 33 and ice chamber13 at dividing wall opening 35, providing zero, or substantially zero, shaft contact between auger shaft 31 and foam cylinder/seal 36. This ensures that the auger shaft 31 imparts no wear on non-porous foam cylinder/seal 36 that could lead to debris from the wearing of non-porous foam cylinder/seal 36 entering the food zone. At the same time, non-porous cylinder/seal 36 seals the auger opening 35 from gearbox 33.

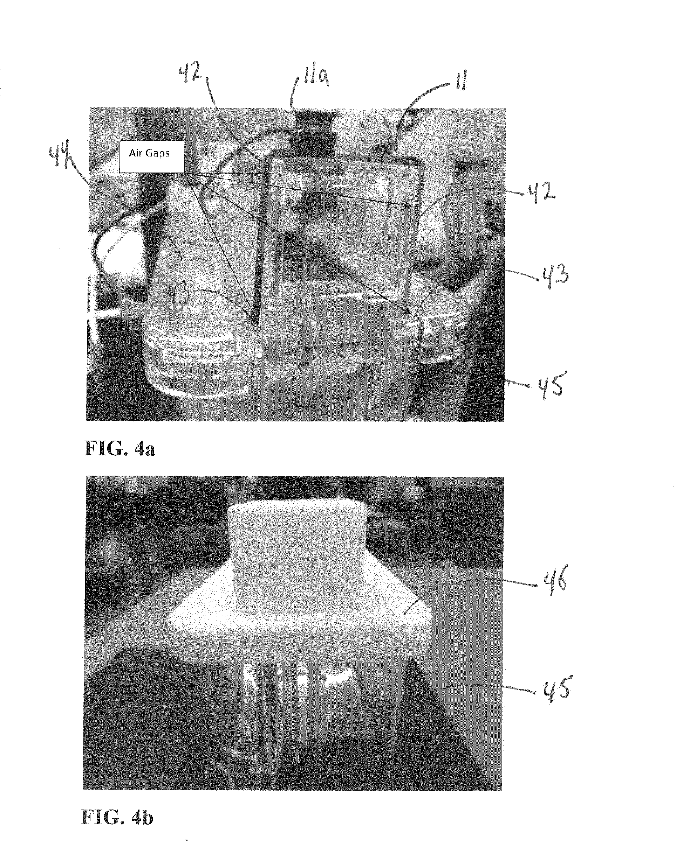

In Figs. 4a and 4b, there is shown float chamber 11 and areas at air gaps (shown generally at arrows pointing to interface 42 in Fig. 4a, where float chamber 11 is mounted to interior partition 29 (in Fig. 2b)) where contaminants could possibility enter the food zone. In ice machines, float chamber 11 is used to balance the incoming water for the production of ice so that as water is needed, a float in float chamber 11 allows water to enter the ice making area, in particular ice chamber 13, and when water is not needed, the float in float chamber 11 stops the flow of water. The float in float chamber 11 operates in a manner similar to the float devices in water tanks in for, example, residential toilet tanks and hot water supplies for hot water production via an oil or gas burner. In ice making machines, gaps exist where contamination may occur where float chamber 11 is mounted to interior partition 29 (i.e., at 42) and at 43 where a cover 44 encloses float chamber 11 and water reservoir 45. The volume of reservoir 45 is controlled by the float in float chamber 11. In the present disclosure it is provided that the gaps 42 and 43 can be eliminated by a molded cover 46, thereby providing a seal against potential contamination. Cover 46 is preferably made without any opening for water line 11a, so that an opening for water line 11a may be specifically located in each instance. It will be recognized that sealing of the float chamber 11 by cover 46 in this manner may necessitate the need for a filtered breather or venting system to the food zone. Such a filtered breather or venting system would serve to prevent a vacuum from occurring in the combination of float chamber 11 and molded cover 46. A vacuum in this instance could occur when a volume of air cannot enter the float chamber 11 to replace an equal volume of water leaving float chamber 11 through drain line 27 (see, Fig. 2b). In the event that such a vacuum occurred, water drainage from reservoir 45 could be inhibited or prevented.

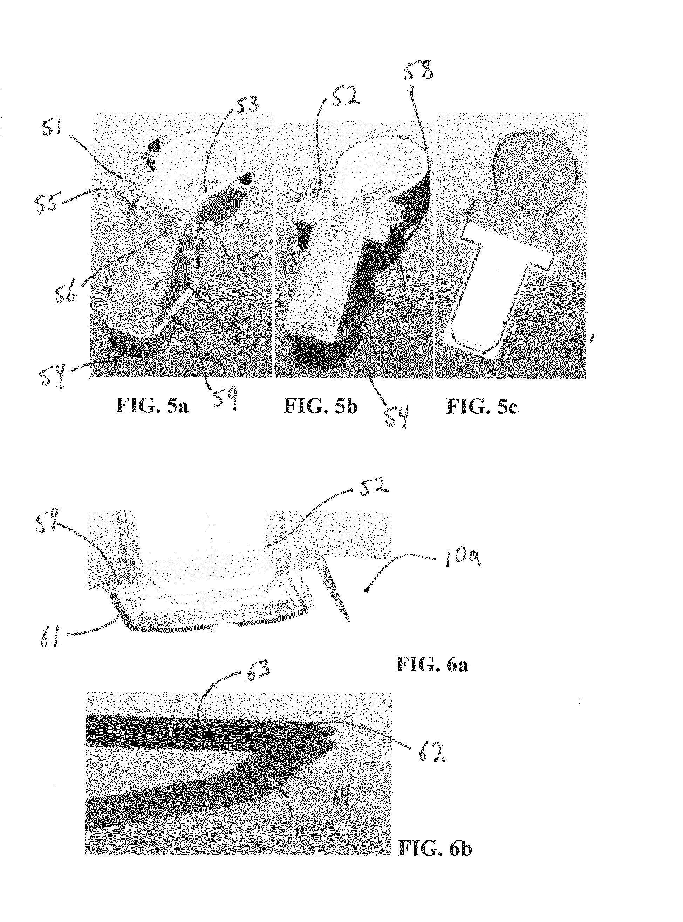

In Figs. 5a, 5b and 5c devices and methods are shown for sealing potential sources of contamination at or near areas of an ice chute 12 (see, Figs. 1b and 1c). In general, in ice machines, an ice chute 12 is provided for allowing ice to be transferred from an ice production area, e.g., ice chamber 13, to an ice storage area, e.g., ice bin 10 (shown in Figs. 1a and 1b). Referring to Fig. 5a, in general, ice chute assembly 51 comprises ice chute 12 that communicates with both an ice making area ("proximal" portion, below 53) and an ice storage area ("distal" portion, below 54) of the ice machine. Also in general, an ice chute 12 includes various sensors 55 and a damper 56 device that help to control the movement of the ice via ice chute 12 from the ice making area (below 53) to the ice storage area (below 54) of the ice making machine. In such an ice chute assembly, the sensors 55 are generally located close to or adjacent ice chute 12 but not enclosed, and the communication between such sensors 55 and ice chute 12 may have openings associated therewith. Also, damper 56, as it is raised by the flow of ice from the ice making area to the ice storage area due to the flow of ice through the chute, may on occasion cause a cover 57 associated with the ice chute12 to lift and provide an unwanted area for contaminants to enter ice chute 12. According the present disclosure, it is proposed to provide methods and devices for sealing an ice chute 12. In Fig. 5b, there is shown an embodiment of the present disclosure wherein an ice chute assembly 51 has sensors 55 that are enclosed in a housing 58 associated with the ice chute 12, and cover 52 is provided to enclose the entire ice chute assembly 51, including the enclosed sensors 55. Also generally associated with the distal end of ice chute 12 is a flange-like portion 59 that maintains the ice chute 12 distal end in proper cooperative relation to the opening 61 of the ice bin 10 (see, Fig. 6a). Also provided is a gasket 59' (Fig. 5c) for completely surrounding near the outer edge of cover 52 (Fig. 5c). Gasket 59' is provided to be matchingly disposed along the inner periphery of the configuration of the ice chute assembly 51 to cover the ice chute 12, damper 56 and, preferably, sensors 55 as well. Also preferably, gasket 59' is of a relatively low durometer material (e.g., of soft vinyl of thermoplastic, known materials to those skilled in the art) molded onto the cover in a manner to surround the edge of the cover 52 in contact with the ice chute assembly 51.

In most ice machines, ice chute12 is in communication with ice bin 10 (or another ice storage area) at a distal end (adjacent to 54) of the ice chute 12 from the ice making area. Referring back to Fig. 5a for a moment, ice bin 10 (or ice storage area) is generally disposed at 54 of distal end of ice chute assembly 51. Referring now to Fig. 6a, also in general, the distal end of the ice chute 12 comprises a shape that generally conforms to an opening 61 of ice bin 10 into which the ice passing from ice chute 12 enters ice bin 10. Also generally, associated with this distal end of ice chute 12 is the flange-like portion 59 that maintains ice chute 12 distal end in proper cooperative relation to the opening 61 of ice bin 10. For manufacturing and assembly purposes of the ice making machine, the opening 61 of the ice bin 10 into that the distal portion of ice chute 12 communicates, is not and cannot be made with extremely close tolerance. As a result, even with the above-mentioned flange-like portion 59 associated with the distal end of ice chute 12, the distal portion of ice chute 12 and opening 61 of the ice bin 10 can still likely provide spacing that may provide area(s) that allow contaminants to pass through. According to the present disclosure, there are provided methods and devices to seal the interface between ice chute 12 distal end and ice bin opening 61. Such sealing methods and devices can include gasketing methods and devices of various forms to seal this interface. One embodiment of the sealing method and devices of the present disclosure is shown in Fig. 6b. Turning to Fig. 6b, the seal between the ice chute distal end and the ice bin interface can comprise a molded gasket 62 that employs a variable section 63 to accommodate a non-constant gap between mating parts of the distal end of ice chute 12 and ice bin opening 61. Gasket 62 employs compliant ribs 64 and 64' for sealing, similar to those used in insulated beverage containers. Rib 64 is located on the top surface of ice bin lid 10a, and rib 64' is located on the underside of ice bin lid 10a, as viewed in Fig. 6b. In another specific embodiment, the seal may be accomplished by a gasket having an essentially "L" shape, wherein one portion of the "L" (e.g., rib 64 in Fig. 6b) rests on the upper surface of ice bin opening 61 of ice bin lid 10a adjacent to the distal end of ice chute 12 for sealing the area of contact between the distal end of ice chute 12 and the upper surface of the ice bin opening 61, and another portion of the "L" drops down into the opening of ice bin lid 10a to assist in preventing contaminants from entering ice bin 10. In either such case, gasket 62 is preferably made of a compliant material so as to ensure that any non-constant gap between the distal end of ice chute 12 (and in particular of flange-like portion 59) and ice bin opening 61 of ice bin 10 is properly sealed to the extent possible. The outer perimeter of gasket 62 is nominally manufactured to accommodate, and insert into and against, the inner perimeter of opening 61 of ice bin10.

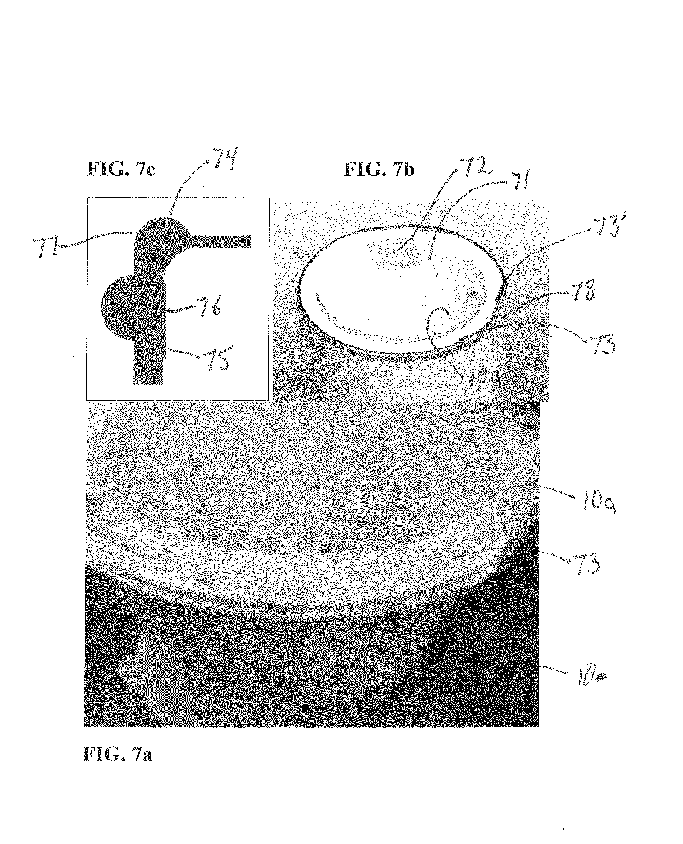

Referring to Fig.7a, in most ice machines, an ice bin lid 10a (see, Fig.6a) covers ice bin 10 to prevent contaminants from entering therein. Also, as shown in Fig. 7b, ice bin lid 10a has recessed portion 71 and opening 72 that is configured to accommodate the "distal" portion, below 54 (see, Fig. 5a), of ice chute 12. Although ice bin lid 10a helps to prevent contaminants from entering ice bin 10, the interface between the ice bin lid 10a and ice bin 10 is often non-uniform, and there is unavoidably a variable gap and flatness between the surface of the ice bin lid 10a and ice bin edge 73 of ice bin 10 adjacent thereto. According to the present disclosure, there are provided methods and devices for sealing this interface between ice bin lid 10a and ice bin edge 73. Such sealing methods and devices can include gasketing methods and devices of various forms to seal this interface. For example, the seal between the ice bin lid 10a and the ice bin edge 73 interface can comprise an extruded gasket 74, preferably of compliant material, that can accommodate a variable gap and flatness between the contacting surfaces of ice bin lid 10a and ice bin edge 73. In one specific embodiment according to Fig. 7c, there is provided a gasketing method and device to seal the interface between the ice bin 10 and ice bin lid 10a located at ice bin edge 73. This gasketing method and device preferably employs an extruded gasket 74 that includes a compliant section 75 to accommodate any variable gap and flatness between sealing surfaces of bottom of ice bin lid 10a against upper edge of ice bin 10. This gasketing method and devices also preferably employs sealing ability on two orthogonal planes where part non-uniformity is an issue. For example, protrusion 76 serves to provide a tight seal against the inner diameter of ice bin 10, and variable diameter of extruded gasket 74 at portion 77 serves to accommodate unevenness between the outer perimeter of ice bin lid 10a and inner diameter of ice bin 10. Fig. 7c shows a cross-sectional view of the specific extruded gasket 74 shown in the embodiment of Fig. 7a. It will be recognized that the disclosure herein is not limited to the specific example set forth in Figs. 7a, 7b and 7c. In the embodiment of Figs. 7a, 7b and 7c, the extruded gasket 74 is specifically designed for the configuration of the specific ice bin 10 and ice bin lid 10a used. In the embodiment in Figs. 7a, 7b and 7c, ice bin 10 and ice bin lid 10a are designed to accommodate their placement inside of the ice machine. The flat side 78 of ice bin 10 and flat edge 73' of ice bin lid 10a accommodate placement of ice bin 10 against a wall of the ice machine (as can be most clearly seen in Fig. 7a). It will be appreciated that the scope of the present disclosure is not limited to this specific embodiment.

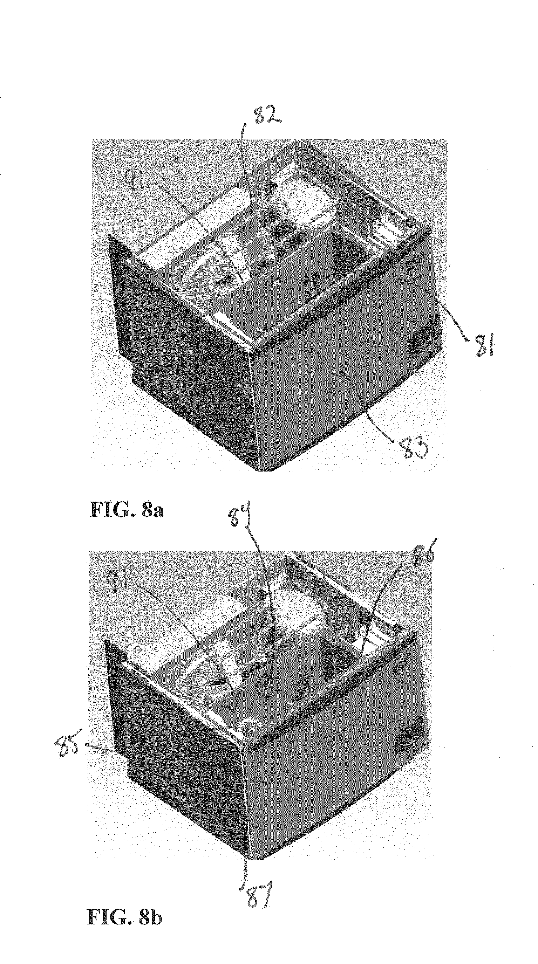

Figures 8-12 show methods and apparatuses for sealing the open areas of a cube ice machine from contaminants.

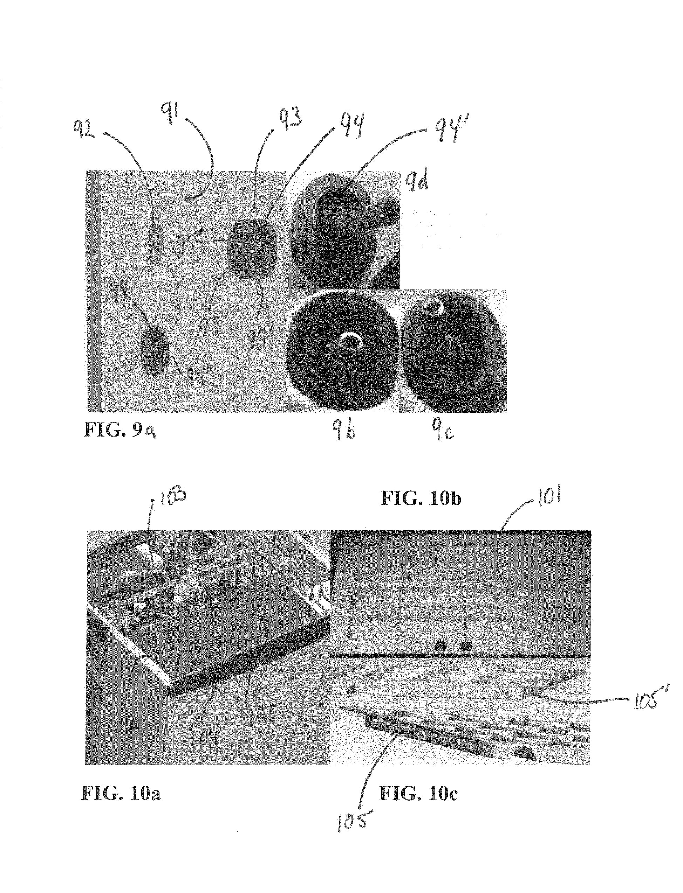

Fig. 8a shows the food zone 81 and machine zone 82 of an ice making machine. Located in front of the food zone 81 is door 83. Fig. 8b shows four (4) areas of potential contamination in an ice machine of this type and Figs. 9-12 show methods and apparatuses for sealing these four (4) areas from contamination. In general, these four (4) areas are water supply inlet 84, supply line inlet/waste line exit 85, food zone cover area 86, and front door edge 87.

Shown in Fig. 9a is one embodiment of sealing the area where supply line inlet/waste line exit 85 passes through the wall of the ice machine into the food zone from outside of the ice machine. To explain further, the majority of all ice machines have in common the entrance or exit of components or of the supply line(s) (or waste lines) of, e.g., a refrigeration system, cleaning systems, water supplies, harvest assist devices, and the like, into the food zone. Due to assembly tolerance variability, many openings for these lines necessarily are much larger than the diameter of the item or device passing through them. One specific method and device according to this embodiment is providing one or more bushing(s) of suitable material(s) that effectively contact the inner perimeter or edge of an opening associated with the item or device passing through it, and also seal against the outer perimeter or edge of the item or device passing through the opening. In Fig 9a, there is shown by way of example, a bushing that functions in accordance with this embodiment of the present disclosure. In Fig. 9a, there is shown for exemplary purposes an ice machine wall 91 and opening 92 there through for accommodating one of any of a number of supply/waste lines. In Fig. 9a, there is shown bushing 93 comprised of a flexible portion 94 to meet and surround the supply/waste line 85 and retaining portion 95 to anchor bushing 93 to opening 92. In the embodiment shown in Fig. 9a, flexible portion 94 is shown to be generally conical in shape while similar portion 94' is shown to be more of a raised oval shape. The shape of flexible portion 94, as shown, is not critical. The function of flexible portion 94, regardless of shape, is to provide flexibility thereto so as to be able to accommodate different diameters of, e.g., pipe and to be able to accommodate various placements of the supply/waste lines, as shown on the three views depicted as Figs. 9b, 9c and 9d. Figs. 9b, 9c and 9d show various skewed arrangements of pipes passing through flexible portion 94, indicating the many variations of pipe passage the flexible portion 94 can accommodate. Retaining portion 95 of bushing 93 can be of any general design to accommodate fitting into the selected opening 92. In Fig. 9a, retaining portion 95 of bushing 93 is shown as a "double flange" design, wherein one flange 95' of bushing 93 contacts one side of ice machine wall 91, and the other flange 95" contacts the other side of ice machine 91 wall with retaining portion 95 of the bushing 93 between the two flanges making contact with the inner edge surface of opening 92. Explaining further, retaining portion 95 has two flanges 95' and 95", disposed away from and on opposite sides of retaining portion95, flanges 95' and 95" surrounding the periphery of bushing 93 in Fig. 9a. Of course, flanges 95' and 95" need not surround the entire periphery of bushing 93 in order to perform their function. As shown in the lower left side of Fig. 9a, when in place in wall 91 of the ice machine, flange 95' contacts one side of wall 91, while flange 95" contacts the other side of wall 91 (not shown), thus forming the seal in the wall opening through that supply/waste lines pass. Just as easily, bushing 93 could be of any other design and could be glued in place in opening 92, rather than held in place by the "double flange" design of Fig. 9a.

In most ice machines, the food zone is covered by the ice machine lid that provides some protection from the entry of contaminants therein. Nevertheless, although generally the ice machine lid is manufactured to fit quite securely and tightly around the periphery of the ice machine itself, due to variances in actual production and assembly, the ice machine lid often does not cover or seal the food zone tightly or completely. As a result, the food zone is subject to contaminant entry from other areas of the ice machine. This condition may be exacerbated due to the fact that one or more fans are generally used to circulate air from the outside environment into the ice machine to cool the inside thereof from excessive heat generation due to working and electrical components located inside the ice machine housing. Thus, a combination of fans and vents are generally employed to circulate air in, through and out of the ice machine. Although this is effective for maintaining the operating condition/temperature of the inside of the ice machine, it also has the deleterious effect of circulating any contamination as well. In addition, the fan(s), such as a condenser fan, also tend to create a positive pressure inside the ice machine and this has the effect of raising the top cover off the ice machine, again creating the possibility of providing openings/opportunities for contaminants to enter the food zone. The fan(s) are usually also reversed in their direction of flow, and this could cause air from the food zone to travel over the bulkhead associated with the food zone. Thus, there is also provided by the present disclosure methods and devices for sealing the top of the food zone.

One embodiment of this aspect of the present disclosure is shown in Figs. 10a-10c. The embodiment shown in Figs. 10a-10c comprises sealing the top of the food zone using a flexible, self-sealing part (a "food zone cover 101 ") that requires no fasteners. In Fig. 10a, the food zone cover 101 seals along the edge of the side supports at 102, bulkhead 103 (that is the same in general as wall 91 in Fig. 9a) and top rail 104 that provide the outer periphery of the food zone. Food zone cover 101 serves to reduce or prevent contaminates from being blown over the outer periphery of the food zone and into the food zone. Food zone cover 101 is assisted in retaining its position by the ice machine lid that lays over the ice machine and helps to press the food zone cover 101 in place. Also, preferably, food zone cover 101 is assisted in retaining its position by sealing ribs 105 and 105' that compress against the inner edge of the periphery of the food zone to increase the sealing characteristics of food zone cover 101. Preferably, food zone cover 101 is a flexible, pliable material such as soft vinyl, compressible rubber, and the like. Sealing ribs 105 and 105' are also preferably of a flexible pliable material. When food zone cover 101 is placed across the top of the food zone, sealing ribs 105 and 105' are caused to deflect inwardly toward the outer edge of food zone cover 101. This deflection of sealing ribs 105 and 105' cause food zone cover 101 to be tensioned into position across the top edge of the food zone.

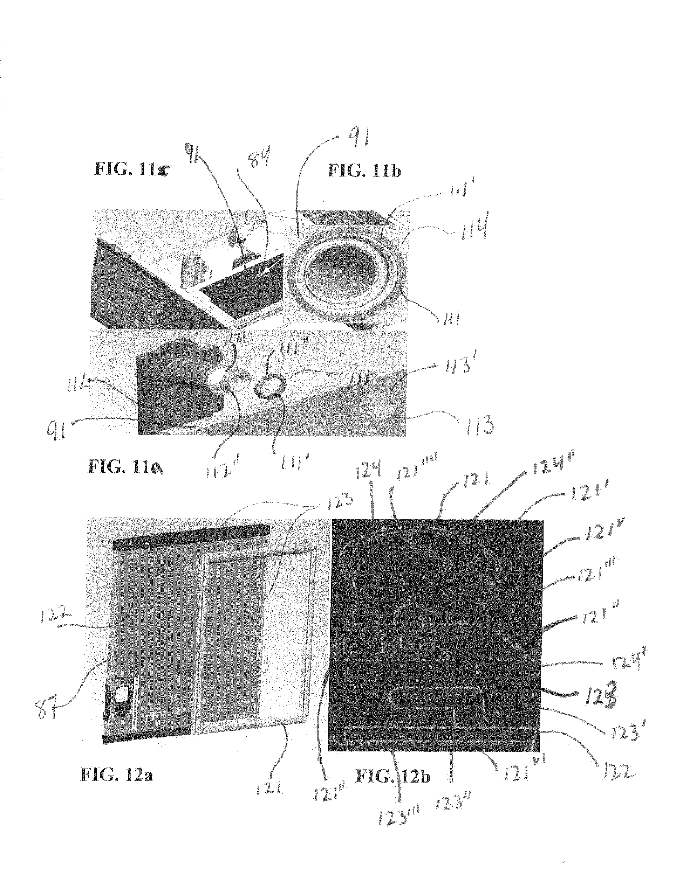

In most ice machines, an opening through the bulkhead of the ice machine is provided for entry of components of a water distribution system, such as a water line, for ice making purposes. Again, for manufacturing and assembly purposes of the ice making machine, the opening of the bulkhead of the ice machine through that the components of the water distribution system pass is not and cannot be made with extremely close tolerances. As a result, the parts fitting together where the water distribution system lines meet the bulkhead may necessarily leave openings or gaps around the water distribution system entrance and bulkhead into the food zone that could allow contaminants to enter. According to the present disclosure, there are provided methods and devices for sealing this interface between the water distribution system entrance and opening(s) in the bulkhead providing that entrance(s). Such sealing methods and devices can include gasketing methods and devices of various forms to seal this interface. Figs. 11a, 11b and 11c depict one specific embodiment according to the present disclosure. According to this specific embodiment, as shown in Fig. 11a, a seal is provided by non-porous washer 111 that seals the mating parts of water distribution system 112 and bulkhead entrance 113 therefor through wall 91, as well as prevents gaps into food zone that may be caused by the part tolerances necessitated by an assembly fit. In this specific embodiment, non-porous washer 111 is provided as a washer, the inner perimeter 111' of which contacts and meets the face of the outer perimeter 112" of the portion/part of water distribution system pipe 112' that enters through the bulkhead. The outer perimeter 111" of the washer is preferably provided with a dimension that is at least slightly greater than the inner perimeter 113' of the opening of the bulkhead through wall 91 through that the water distribution system pipe 112' passes. The mated arrangement of the water distribution system pipe 112' and bulkhead entrance 113 are shown from the perspective from inside the food zone (looking outwardly at water supply inlet 84 of Fig. 8b) at 114 in Fig. 11b. In Fig. 11b, non-porous washer 111 is compressed between the face of outer perimeter 112" of water distribution system pipe 112' and outer side of the food zone 81 at water supply inlet 84.

As is known, ice machines are provided with a door so as to make the inside accessible for cleaning, maintenance and repair. A further embodiment of sealing methods and devices according to the present disclosure is shown in Figs. 12a and 12b. According to this embodiment, as shown in Fig. 12a, door seal 121 is provided that is compliant, non-magnetic and removeably attaches to the inner surface 122 of ice machine door 87. In this embodiment, preferably, door seal 121 is a compliant, flexible and non-magnetic material. Shown in the embodiment of Fig.12a, door seal 121 is removeably attached to the inner surface 122 of door 87 by a fully enclosed "hook" feature. As is shown in Fig. 12a, disposed along the inner surface 122 of the door 87 are a series of spaced hooks 123. Spaced hooks 123 reversibly insert into receiving portions 124 (shown in Fig. 12b) matingly disposed on door seal 121. This embodiment of attaching door seal 121 securely, but removeably, to inner surface 122 of door 87, as well as enclosing receiving portions 124 within door seal 121, allow for easy cleanability of the inner surface 122 of door 87, as well as of door seal 121. One specific embodiment of the design and structure of door seal 121, spaced hooks 123 and receiving portions 124 of door seal 121 is depicted in Fig. 12b. Door seal 121 and receiving portions 124 are comprised of several functional portions. Outer dimension 121' of door seal 121 can be any shape, but is depicted in Fig. 12b as generally oval-like. Outer dimension 121' of door seal 121 includes two "leg-like" appendages 121". Appendages 121" serve to contact inner surface 122 of door 87 when door seal 121 is in place, serving to improve the ability of door seal 121 to prevent contaminants from entering the food zone via door 87. Appendages 121" are of course optional. Door seal 121 also has inner dimension 121"' that serves, in the embodiment of Fig. 12b, to provide some degree of structural integrity to door seal 121 and also to form one dimension of retaining portion 124, that will be described herein. Between outer dimension 121' and inner dimension 121"' is a generally void space, or air space, 121"" Struts 121^{v} are disposed within air space 121"' to provide support between outer dimension 121' and inner dimension 121"' so that door seal 121 does not collapse. Struts 121^{v} are made of resilient and flexible material so that they can be compressed when door 87 is closed and door seal 121 is compressed between inner surface 122 of door 87 and the outer wall of the ice machine, yet return to their original position when door 87 is opened and the compressive force between inner surface 122 of door 87 and outer wall of the ice machine is relieved. Second void pace 121^{vi} serves a similar purpose as void space 121^{v}. Retaining portions 124 and spaced hooks 123 will now be described as depicted in Fig. 12b. Retaining portions 124 are configured so that the opening 124' of retaining portions 124 is of general the same shape and dimension as spaced hooks 123, both for ease of fit and for ease of removal. Obviously, for purposes of manufacture, openings 124' of retaining portions 124 should be disposed in relation to hooks 123 so that hooks 123 and retaining portions can be mattingly engaged. Of course, opening 124' of retaining portion 124 may be arranged as a continuous or semi-continuous channel around all or portions of the periphery of door seal 121. All such embodiments are included in this disclosure. Also as shown in Fig. 12b, opening 124' of retaining portion 124 includes a gripping feature 124". Gripping feature 124" is optional and may be disposed along one or both sides of opening 124', or may be omitted entirely. Gripping feature 124" is shown in Fig. 12b as a "saw-tooth" design and is designed to assist in gripping and holding spaced hooks 123. Spaced hooks 123 are designed to engage mattingly also with opening 124' of retaining portion 124. In the embodiment shown in Fig. 12b, spaced hooks 123 are shown as essentially comprised of two major portions, vertically disposed portion 123' (in relation to inner surface 122 of door 87), and parallel disposed portion 123" (again in relation to inner surface 122 of door 87). Gap 123"' should be of a dimension to allow fit of spaced hooks 123 into opening 124' of retaining portion 124. Also, spaced hooks 123 are preferably of a rigid material so that they may be more easily inserted in to opening 124' of retaining portion 124.

In the above detailed description, the specific embodiments of this disclosure have been described in connection with its preferred embodiments. However, to the extent that the above description is specific to a particular embodiment or a particular use of this disclosure, this is intended to be illustrative only and merely provides a concise description of the exemplary embodiments. Accordingly, the disclosure is not limited to the specific embodiments described above, but rather, the disclosure includes all alternatives, modifications, and equivalents falling within the true scope of the appended claims. Various modifications and variations of this disclosure will be obvious to a worker skilled in the art and it is to be understood that such modifications and variations are to be included within the purview of this application and the spirit and scope of the claims.

All of the patents, patent publications and other references referred to above are incorporated herein by reference for all that they contain as if the contents thereof have been fully set forth verbatim herein.

## Claims

1. An apparatus that prevents at least a portion of contaminants from passing from an outside environment into a food zone of an ice machine, the apparatus comprising:
at least one barrier disposed between the outside environment and the food zone, wherein the barrier is sized and/or configured to prevent ingress of contaminants from the outside environment into the food zone.

2. The apparatus according to claim 1, wherein the barrier is selected from the group consisting of a seal, a trap, a gasket, a positive pressure within the food zone, a bushing or any combination of the foregoing.

3. The apparatus according to claim 1, wherein the outside environment comprises a water disposal area and wherein the barrier is comprised of a trap in a drain pipe between the food zone and the water disposal area, the trap comprised of at least two reversed bends in the drain pipe such that a volume of water is captured in the trap.

4. The apparatus according to claim 1, wherein the outside environment comprises an opening in a dividing wall of the food zone disposed to accept a shaft of a mechanical device located in a housing, wherein the barrier is comprised of a cylindrical seal having a length, an inside diameter, an outside diameter and a thickness between the inside and outside diameter, the length sufficient to fit between and concurrently contact the dividing wall and the housing, the outside diameter sufficient to surround the opening, and the inside diameter sufficient to surround the shaft but not contact the shaft.

5. The apparatus according to claim 1, wherein the outside environment comprises at least one opening adjacent an ice transfer structure, the ice transfer structure in communication with both an ice production area and an ice storage area, wherein the barrier is comprised of a cover having a gasket, wherein the gasket is coincident with a periphery of the ice transfer structure, and wherein the cover encloses the ice transfer structure.

6. The apparatus according to claim 5, wherein the ice transfer structure further comprises at least one device for controlling movement of ice through the ice transfer structure, wherein the barrier further comprises a housing for enclosing the at least one device, and wherein the cover also encloses the housing.

7. The apparatus according to claim 1, wherein the outside environment comprises an end of an ice transfer structure in communication with an opening in an ice storage area, wherein the barrier comprises a gasket having an inside geometry, an outside geometry and a thickness between the inside geometry and the outside geometry, the inside geometry adapted to accept and conform to the end of the ice transfer structure, the outside geometry adapted to accept and conform to the opening of the ice storage area, and the thickness adapted to fill space between the end and the opening.

8. The apparatus according to claim 7, wherein the gasket further comprises a compliant rib portion that seals at least a portion of an outside surface of a periphery of the opening in the ice storage area.

9. The apparatus according to claim 1, wherein the outside environment comprises an interface between an ice bin and an ice bin lid, wherein the barrier comprises an extruded gasket having a compliant section to accommodate a variable gap and flatness between a bottom surface of the ice bin lid and an upper edge of the ice bin.

10. The apparatus according to claim 9, wherein the extruded gasket further comprises a protrusion to provide a seal between an inner geometry of the ice bin and an outer geometry of the ice bin lid and a variable extruded portion to accommodate unevenness between the outer geometry of the ice bin lid and the inner geometry of the ice bin.

11. The apparatus according to claim 1, wherein the outside environment comprises an opening to accommodate a supply/waste line entering the food zone, wherein the barrier comprises a bushing having an outer geometry that contacts and seals the opening and a flexible portion adapted to accept and seal against an outer geometry of the supply/waste line.

12. The apparatus according to claim 11, wherein the outer geometry of the bushing further comprises at least one flange adapted to contact and seal a side of the opening.

13. A method of preventing at least a portion of contaminants from an outside environment into a food zone of an ice machine, the method comprising:
identifying an opening between the outside environment and the food zone;
measuring spaces comprising the opening;
providing at least one barrier disposed between the outside environment and the food zone, wherein the barrier is sized and/or configured to prevent ingress of contaminants through the opening from the outside environment into the food zone.

14. The method according to claim 13, wherein the barrier is selected from the group consisting of a seal, a trap, a gasket, a positive pressure within the food zone, a bushing or any combination of the foregoing.
